# EUROPÄISCHE PATENTSCHRIFT

(11) **EP 3 709 498 B1**
(45) Veröffentlichungstag und Bekanntmachung des Hinweises auf die Patenterteilung: **01.05.2024**
(21) Anmeldenummer: 20160322.2
(22) Anmeldetag: 02.03.2020
(51) Int. Cl.: H02M 7/483

(54) **AUSGLEICH VON SCHALTMODULSPANNUNGEN IN DEN UMRICHTERARMEN EINES MODULAREN MEHRSTUFENSTROMRICHTERS BEI HOHEM MODULATIONSINDEX**
BALANCING OF SUBMODUL VOLTAGES IN THE ARMS OF A MODULAR MULTILEVEL CONVERTER OPERATING AT A HIGH MODULATION INDEX
L'ÉQUILIBRAGE DES TENSIONS SOUS-MODULES DANS LES BRAS D'UN CONVERTISSEUR MODULAIRE À PLUSIEURS NIVEAUX FONCTIONNANT À UN INDICE DE MODULATION ÉLEVÉ

(30) Priorität: 13.03.2019 DE 102019203407
(43) Veröffentlichungstag der Anmeldung: 16.09.2020
(73) Patentinhaber: Siemens Energy Global GmbH & Co. KG, 81739 München (DE)
(72) Erfinder: Jungkunz, Clemens, 91056 Erlangen (DE); Semmler, Sebastian, 90427 Nürnberg (DE); Alvarez Valenzuela, Rodrigo Alonso, 90408 Nürnberg (DE); Dallmer-Zerbe, Kilian, 91088 Bubenreuth (DE); Lorenz, Andreas, 91054 Erlangen (DE)

(56) Entgegenhaltungen:
- LU MAOZENG ET AL: "Fundamental-Frequency Reactive Circulating Current Injection for Capacitor Voltage Balancing in Hybrid-MMC HVDC Systems During Riding Through PTG Faults", IEEE TRANSACTIONS ON POWER DELIVERY, IEEE SERVICE CENTER, NEW YORK, NY, US, Bd. 33, Nr. 3, 1. Juni 2018 (2018-06-01), Seiten 1348-1357, XP011680389, ISSN: 0885-8977, DOI: 10.1109/TPWRD.2017.2755505 [gefunden am 2018-04-06]

## Beschreibung

Die Erfindung betrifft ein Verfahren zum Betreiben einer Stromrichteranordnung mit einem modularen Mehrstufenstromrichter (Modularer Multilevel Converter), der wenigstens einen Stromrichterarm mit einer Reihenschaltung zweipoliger (zweianschlüssiger) Schaltmodule umfasst, wobei jedes der Schaltmodule mehrere Halbleiterschalter sowie einen Energiespeicher aufweist, wobei wenigstens einige der Schaltmodule Schaltmodule eines ersten Typs und wenigstens einige weitere der Schaltmodule Schaltmodule eines zweiten Typs sind, bei dem an dem wenigstens einen Stromrichterarm eine Armspannung erzeugt wird, die einen Armstrom durch den Stromrichterarm bewirkt.

Ein Verfahren diesbezüglich ist aus dem Beitrag "Optimized Design of a Hybrid-MMC and Evaluation of Different MMC Topologies" von Viktor Hoffmann und Mark-M. Bakran (EPE'16 ECCE Europe) bekannt. Dort ist eine Stromrichteranordnung mit einem modularer Mehrstufenstromrichter offenbart, der zwischen einem Wechselspannungsnetz und einem Gleichspannungsnetz geschaltet ist. Der Mehrstufenstromrichter weist sechs Stromrichterarme mit Schaltmodulen auf, die jeweils zwischen einem Gleichspannungsanschluss und einem Wechselspannungsanschluss angeordnet sind. In jedem Stromrichterarm sind zwei Typen von Schaltmodulen eingesetzt, nämlich Vollbrückenschaltmodule und Halbbrückenschaltmodule. Bei dem bekannten Verfahren wird eine Armspannung Varm gemäß der Formel Varm = VDC/2 + m * VDC/2 * sin(omega * t) erzeugt, wobei VDC eine gleichspannungsseitige Spannung, omega eine (Kreis-)Frequenz repräsentiert, t Zeit bezeichnet und m ein Modulationsindex ist, der als m = 2 * VACpeak/VDC definiert ist. Mittels der erzeugten Armspannung kann ein entsprechender Armstrom bewirkt werden, der in seinem zeitlichen Verlauf innerhalb einer Periode zwei Nulldurchgänge aufweist. Es ist jedoch auch bekannt, dass der Mehrstufenstromrichter bei einer reduzierten gleichspannungsseitigen Spannung VDC, einer erhöhten AC-Spannung, also insbesondere in Fällen, wenn der Modulationsindex genügend groß gegenüber dem eigenen Nennwert ist, betrieben werden kann, wobei in einem solchen Fall ein veränderter Armstrom bewirkt wird. Der veränderte Armstrom (in dessen zeitlichem Verlauf) weist unter Umständen keine Nulldurchgänge mehr auf.

Der Einsatz von Kreisströmen bei einem Betrieb eines hybrid-MMC ist aus dem Beitrag von Maozeng et al. "Fundamental-Frequency Reactive Circulating Current lnjection for Capacitor Voltage Balancing in Hybrid-MMC HVDC Systems During Riding Through PTG Faults", IEEE TRANSACTIONS ON POWER DELIVERY, VOL.33, NO.3, JUNE 2018, S. 1348-1357 zu entnehmen.

Die Aufgabe der Erfindung ist es, ein artgemäßes Verfahren anzugeben, das einen möglichst zuverlässigen Betrieb der Stromrichteranordnung ermöglicht.

Die Aufgabe wird durch ein Verfahren zum Betreiben einer Stromrichteranordnung mit einem modularen Mehrstufenstromrichter gemäß Anspruch 1 und der hierzu korrespondierenden Stromrichteranordnung gemäß Anspruch 13 gelöst. Vorteilhafte Ausführungsformen sind in den abhängigen Ansprüchen definiert.

Erfindungsgemäß ist erkannt worden, dass mittels einer Einprägung eines Stromrichterkreisstromes erreicht werden kann, dass ein Armstrom mit einer positiven und einer negativen Komponente und damit mit einem Nulldurchgang erzeugt werden kann. Demnach wird, falls der Armstrom, insbesondere aufgrund einer bestimmten erzeugten Armspannung, keinen Nulldurchgang aufweist, ein Stromrichterkreisstrom erzeugt, so dass ein durch den Stromrichterarm fließender Armstrom resultiert, der (in seinem zeitlichen Verlauf und innerhalb einer Netzperiode) wenigstens einen Nulldurchgang, geeigneterweise wenigstens zwei Nulldurchgänge innerhalb einer Netzperiode, aufweist. Ein Stromrichterkreisstrom ist dabei dadurch charakterisiert, dass dieser sich weder wechselspannungsseitig noch gleichspannungsseitig des Stromrichters auswirkt (falls der Mehrstufenstromrichter in der gegebenen Anwendung eine Gleichspannungsseite aufweist).

Eigene Untersuchungen haben ergeben, dass Balancierung von Schaltmodulspannungen der beiden Schaltmodul-Typen unter Umständen nicht mehr gewährleistet werden kann, falls der oder die Armströme keine Nulldurchgänge aufweisen. Bei fehlender Balancierung ist dabei ein zuverlässiger Stromrichterbetrieb erschwert bzw. teilweise sogar unmöglich. Eine Balancierung bedeutet dabei beispielsweise, dass eine Balance zwischen den Spannungen der Schaltmodule des ersten Typs und des zweiten Typs besteht. Dabei sind geeigneterweise Energiespeicherspannungen der Schaltmodule zu betrachten, d.h. die während des Betriebs des Stromrichters an den Energiespeichern der Schaltmodule anstehenden Spannungen. Ein Maß für die Balancierung kann beispielsweise bestimmt werden, indem zunächst ein erster Mittelwert über die Energiespeicherspannungen aller Schaltmodule des ersten Typs im betreffenden Stromrichterarm und ein zweiter Mittelwert über die Energiespeicherspannungen aller Schaltmodule des zweiten Typs im gleichen Stromrichterarm berechnet werden, und anschließend ein Balancierungsfehler als eine Differenz der beiden Mittelwerte bestimmt wird. Dieser Balancierungsfehler kann von einer Regelungseinrichtung der Stromrichteranordnung dazu verwendet werden, durch bestimmte Wahl (bspw. Häufigkeit und/oder Reihenfolge) von Schalthandlungen an den Schaltmodulen, eine Balancierung durch Regelung herbeizuführen. Zweckmäßigerweise wird der Spannungsanteil der Schaltmodulspannungen der Schaltmodule eines der Modultypen an der insgesamt gestellten Spannung variiert. Zum Beispiel, wenn die Halbbrückenschaltmodule zu wenig Energie besitzen, wird der Anteil der eingeschalteten Halbbrückenschaltmodule gegenüber demjenigen der Vollbrückenschaltmodule erhöht, damit diese mehr Energie aufnehmen. Ein wesentlicher Vorteil der Erfindung besteht darin, dass eine Balancierung der Schaltmodul-Typen auch dann erreicht werden kann, wenn durch einen vorgegebenen Arbeitspunkt der Stromrichteranordnung Armspannungen erzeugt werden, die Armströme ohne Nulldurchgänge bewirken. Auf diese Weise kann die Zuverlässigkeit der Stromrichteranordnung in deren Betrieb erhöht werden. Zudem kann die Auslegung des Stromrichters vorteilhaft optimieren, insbesondere in Bezug auf die Anzahl der verwendeten Schaltmodule des jeweiligen Typs.

Gemäß einer Ausführungsform der Erfindung werden im Betrieb der Stromrichteranordnung an Anschlussklemmen der Schaltmodule des ersten Typs jeweils eine positive Schaltmodulspannung, eine negative Schaltmodulspannung oder eine Nullspannung und an Anschlussklemmen der Schaltmodule des zweiten Typs jeweils eine positive Schaltmodulspannung oder eine Nullspannung erzeugt. Ein Beispiel für solche Schaltmodule sind Vollbrückenschaltmodule und Halbbrückenschaltmodule. Es ist bekannt, dass Halbbrückenschaltmodule im Betrieb der Stromrichteranordnung im Allgemeinen niedrigere Verluste erzeugen als Vollbrückenschalmodule. Mittels des erfindungsgemäßen Verfahrens lässt sich die Auslegung des Stromrichters derart optimieren, dass eine höhere Anzahl der Schaltmodule des zweiten Typs verwendet werden kann, was die Betriebskosten der Stromrichteranordnung vorteilhaft senkt.

Zweckmäßigerweise umfasst der Mehrstufenstromrichter mehrere Stromrichterarme, wobei der erzeugte Stromrichterkreisstrom in einem durch die Stromrichterarme gebildeten geschlossenen Stromkreis fließt. Alternativ kann der Stromrichter einen zusätzlichen Strompfad aufweisen, beispielsweise einen Kondensatorzweig mit einem Kondensator, mittels dessen der geschlossene Stromkreis bzw. Strompfad gebildet wird. Auf diese Weise ist es gewährleistet, dass der Stromrichterkreisstrom nur durch den Stromrichter fließt und sich außerhalb des Stromrichters nicht (oder nicht wesentlich) bemerkbar macht.

Gemäß einer Ausführungsform der Erfindung umfasst der Mehrstufenstromrichter einen ersten Stromrichterzweig, der sich zwischen einem ersten und einem zweiten Gleichspannungspol des Mehrstufenstromrichters erstreckt, wobei der erste Stromrichterzweig einen ersten Wechselspannungsanschluss zum Verbinden mit einer ersten Netzphase eines Wechselspannungsnetzes, einen ersten Stromrichterarm zwischen dem ersten Gleichspannungspol und dem ersten Wechselspannungsanschluss sowie einen zweiten Stromrichterarm zwischen dem ersten Wechselspannungsanschluss und dem zweiten Gleichspannungspol umfasst, wobei der erste und der zweite Stromrichterarm jeweils eine Reihenschaltung von Schaltmodulen umfassen, so dass eine erste bzw. zweite Armspannung am zugeordneten Stromrichterarm erzeugbar ist, die einen entsprechend zugeordneten Armstrom durch den zugeordneten Stromrichterarm bewirkt, und der Mehrstufenstromrichter ferner einen zweiten Stromrichterzweig umfasst, der sich zwischen dem ersten und dem zweiten Gleichspannungspol des Mehrstufenstromrichters erstreckt, wobei der zweite Stromrichterzweig einen zweiten Wechselspannungsanschluss zum Verbinden mit einer zweiten Netzphase des Wechselspannungsnetzes, einen dritten Stromrichterarm zwischen dem ersten Gleichspannungspol und dem zweiten Wechselspannungsanschluss sowie einen vierten Stromrichterarm zwischen dem zweiten Wechselspannungsanschluss und dem zweiten Gleichspannungspol umfasst, wobei der dritte und der vierte Stromrichterarm jeweils eine Reihenschaltung von Schaltmodulen umfassen, so dass eine dritte bzw. vierte Armspannung am zugeordneten Stromrichterarm erzeugbar ist, die einen entsprechend zugeordneten Armstrom durch den zugeordneten Stromrichterarm bewirkt, und zur Erzeugung eines Armstrom-Nulldurchganges in einem der Stromrichterarme ein Stromrichterkreisstrom durch den Mehrstufenstromrichter erzeugt wird, der in dem durch die beiden Stromrichterzweige und ggf. die Armdrosseln gebildeten Stromkreis fließt. Diese Anordnung kann entsprechend auf eine dreiphasige Konfiguration erweitert werden. In einer solchen Ausführung ist es unter Umständen sinnvoll, mehrere Stromrichterkreisströme einzuprägen, um eine Balancierung in allen Stromrichterarmen zu ermöglichen. Geeigneterweise gilt für die erzeugten Stromrichterkreisströme, dass iCC1(t) + iCC2(t) + iCC3(t) = 0, wobei iCC1-3 die Kreisströme durch jeweils einen der Stromrichterzweige bezeichnen.

In einer möglichen Ausführung kann ein sinusförmiger Stromrichterkreisstrom erzeugt werden. Zweckmäßigerweise weist der Stromrichterkreisstrom dabei eine Phasenlage auf, die gegenüber der Armspannung eine Phasenverschiebung von +-Pi/2 aufweist (insbesondere bei einer Frequenz von 50 Hz), wobei Pi die Kreiszahl bezeichnet. Bei anderen Frequenzen können andere Phasenverschiebungen vorteilhaft sein, z.B. eine Phasenverschiebung von 3*Pi/2 bei 100 Hz.

Gemäß der Erfindung wird ein Stromrichterkreisstrom erzeugt, der einen rechteckförmigen oder trapezförmigen Strompuls aufweist. Rechteckimpuls ist dabei ein Spezialfall eines Trapezimpulses mit einer besonders steilen Anstiegs- bzw. Abstiegsflanke. Selbstredend ist es auch möglich, dass der Stromrichterkreisstrom mehrere solcher Strompulse aufweist. Die Strompulse können positive und/oder negative Strompulse sein, wobei beispielsweise kann der Stromrichterkreisstrom in jeder Periode wenigstens einen positiven und einen negativen Strompuls aufweisen.

Gemäß einer besonders einfach durchzuführenden Variante wird der Stromimpuls in einem Minimum und/oder einem Maximum des Armstromes erzeugt.

Es wird im Rahmen der Erfindung als vorteilhaft angesehen, wenn eine Amplitude und/oder eine Phase und/oder eine Frequenz des Stromrichterkreisstromes in Abhängigkeit einer Energieasymmetrie der Energien zwischen den Schaltmodulen des ersten und des zweiten Typs festgelegt werden. Die Amplitude, Phasenlage und Frequenz des Stromrichterkreisstromes sind zunächst Freiheitsgrade, die von der Regelung zur Optimierung des Verfahrens genutzt werden können. Die Energieasymmetrie kann dabei als eine Differenz der mittleren Energien der Schaltmodule der beiden Typen bestimmt werden. Anstelle der Energieasymmetrie kann auch beispielsweise eine Spannungsasymmetrie verwendet werden.

Vorzugsweise werden eine Pulsbreite und/oder Pulshöhe des Stromimpulses in Abhängigkeit einer Energieasymmetrie oder einer davon abgeleiteten Größe der Energien zwischen den Schaltmodulen des ersten und des zweiten Typs festgelegt. Mit der Festlegung ist hierbei geeigneterweise ein sich als Ergebnis der Regelung ergebender Wert verstanden. In diesem Sinne werden die festzulegenden Größen eingeregelt. Auch hier kann eine Spannungsasymmetrie oder einer davon abgeleiteten Größe verwendet werden. Es ist dabei zu beachten, dass bei den hierbei beschriebenen Verfahren die Festlegung fortlaufend mittels einer Regelung erfolgen kann.

Bevorzugt wird eine Phase des Stromrichterkreisstromes derart bestimmt, dass diese einer Phase einer vorgegebenen Blindleistung entspricht. Dabei ist die Phase der vorgegebenen Blindleistung geeigneterweise vom jeweiligen Arbeitspunkt der Stromrichteranordnung abhängig.

Gemäß einer Ausführungsform der Erfindung weist der Stromrichterkreisstrom eine Frequenz zwischen 10 Hz und 70 Hz auf. Beispielsweise kann die Frequenz 50 Hz oder 60 Hz betragen und damit der Frequenz eines angeschlossenen Wechselspannungsnetzes entsprechen. Ein besonderer Vorteil dieser Ausführung ist, dass im stationären Zustand der Stromrichteranordnung keine zusätzlichen Oberschwingungen auftreten.

Gemäß einer alternativen Variante weist der Stromrichterkreisstrom eine Frequenz von mehr als 70 Hz auf, besonders bevorzugt eine Frequenz von 90-130 Hz, insbesondere 100 Hz oder 120 Hz oder auch ein anderes Vielfaches von 50 Hz bzw. 60 Hz. Vorteilhaft ergibt ein resultierender Stromrichterkreisstrom keine zusätzliche Wirkleistungskomponente, die bei der Festlegung der Phase des Stromrichterkreisstromes berücksichtigt werden müsste.

Gemäß einer Ausführungsform der Erfindung erfolgt das Erzeugen des Stromrichterkreisstromes nach einer Detektion eines transienten Netzereignisses. Die Detektion kann sich bspw. aus der Überwachung der Schaltmodulspannungen ergeben, bzw. durch eine solche erreicht werden. Der Stromrichterkreisstrom wird demnach eingeprägt, nachdem ein transientes Netzereignis mittels einer geeigneten Detektionseinrichtung festgestellt wurde. Ein solches transientes Netzereignis kann beispielsweise eine wechselspannungsseitige Überspannung, eine reduzierte gleichspannungsseitige Spannung oder dergleichen sein. Auf diese Weise kann auch während solcher transienten (also relativ kurzzeitigen) Ereignisse eine Balancierung und damit ein zuverlässiger Betrieb der Stromrichteranordnung ermöglicht werden.

Die Erfindung betrifft ferner eine Stromrichteranordnung mit einem modularen Mehrstufenstromrichter, der wenigstens einen Stromrichterarm mit einer Reihenschaltung zweipoliger Schaltmodule umfasst, wobei jedes der Schaltmodule mehrere Halbleiterschalter sowie einen Energiespeicher aufweist, wobei wenigstens einige der Schaltmodule Schaltmodule eines ersten Typs und wenigstens einige weitere der Schaltmodule Schaltmodule eines zweiten Typs sind, sowie mit einer Regelungseinrichtung.

Eine solche Stromrichteranordnung ist beispielsweise aus dem bereits erwähnten Beitrag von Hoffmann und Bakran bekannt.

Die Aufgabe der Erfindung ist es, eine solche Stromrichteranordnung anzugeben, die möglichst zuverlässig im Betrieb ist.

Die Aufgabe wird bei einer artgemäßen Stromrichteranordnung erfindungsgemäß dadurch gelöst, dass die Regelungseinrichtung zum Durchführen eines erfindungsgemäßen Verfahrens eingerichtet ist.

Die Vorteile der erfindungsgemäßen Stromrichteranordnung ergeben sich insbesondere aus den Vorteilen, die bereits zuvor im Zusammenhang mit dem erfindungsgemäßen Verfahren erörtert wurden. Selbstredend können alle im Zusammenhang mit dem erfindungsgemäßen Verfahren beschriebenen Merkmale allein oder in Kombination im Zusammenhang mit der erfindungsgemäßen Stromrichteranordnung verwendet werden, falls dies für die jeweilige Anwendung vorteilhaft ist.

Die Erfindung wird im Folgenden anhand eines Ausführungsbeispiels in den Figuren 1 bis 7 weiter erläutert.
Figur 1 zeigt ein Ausführungsbeispiel einer erfindungsgemäßen Stromrichteranordnung in einer schematischen Darstellung;
Figur 2 zeigt ein Beispiel eines Schaltmoduls des ersten Typs in einer schematischen Darstellung;
Figur 3 zeigt ein Beispiel eines Schaltmoduls des zweiten Typs in einer schematischen Darstellung;
Figur 4 zeigt ein Beispiel von Armstrom und Armspannung, wobei der Armstrom einen Nulldurchgang aufweist;
Figur 5 zeigt ein Beispiel von Armstrom und Armspannung, wobei der Armstrom keinen Nulldurchgang aufweist;
Figur 6 zeigt ein Beispiel von Stromverläufen der Armströme mit und ohne zusätzlichen Kreisstrom;
Figur 7 zeigt ein Beispiel für eine Regelungseinrichtung zur Durchführung eines erfindungsgemäßen Verfahrens.

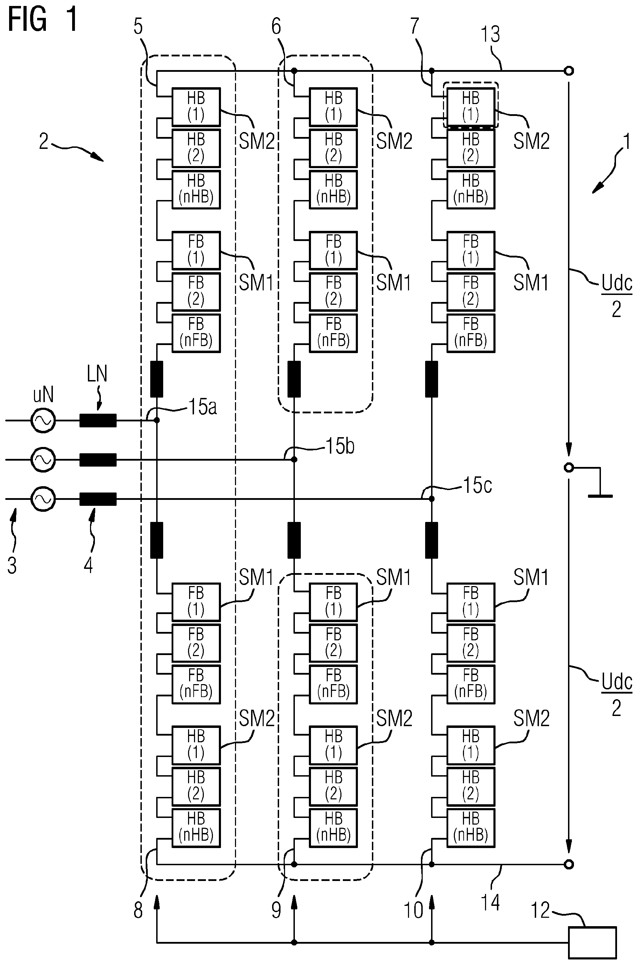

In Figur 1 ist eine Stromrichteranordnung 1 dargestellt. Die Stromrichteranordnung 1 umfasst Halbleiterschalter in Schaltmodulen, die zu einem modularen Mehrstufenstromrichter (MMC) 2 verbunden sind, der im dargestellten Beispiel zur Umwandlung einer Wechselspannung eines Wechselspannungsnetzes 3, mit dem der MMC 2 mittels eines Netztransformators 4 verbunden ist (wobei lediglich die sekundärseitigen Wicklungen LNfigürlich dargestellt sind), in eine Gleichspannung Udc.

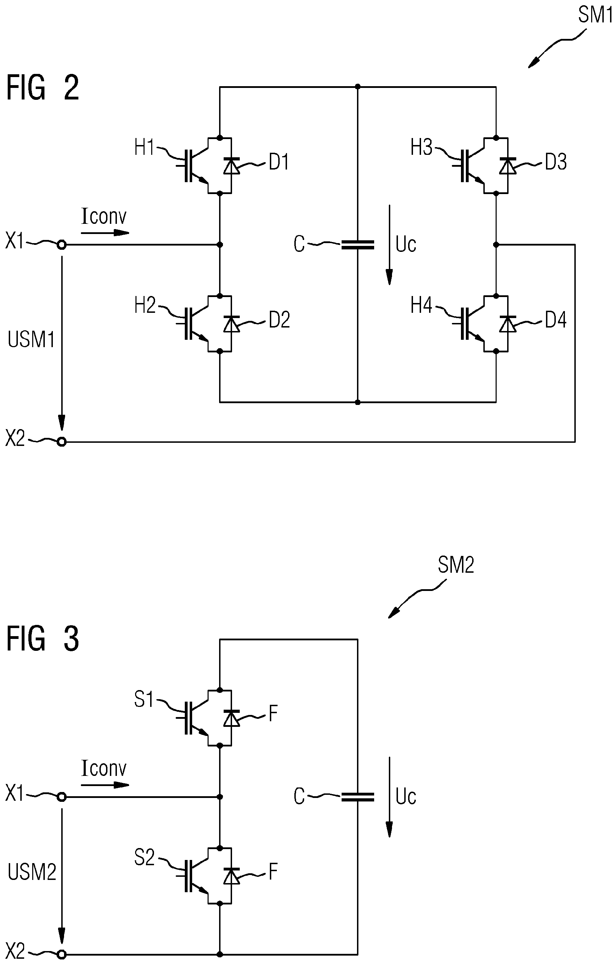

Der MMC 2 umfasst sechs Stromrichterarme 5-10, die miteinander in einer Doppelsternschaltung verbunden sind. Jeder der gleichartig aufgebauten Stromrichterarme 5-10 umfasst eine Arminduktivität 11 sowie eine Reihenschaltung zweipoliger Schaltmodule SM1 des ersten Typs und Schaltmodule SM2 des zweiten Typs. Auch die Anzahl der Schaltmodule SM1 bzw. SM2 in jedem Stromrichterzweig 5-10 ist grundsätzlich beliebig und an die jeweilige Anwendung anpassbar. Die Schaltmodule SM1 des ersten Typs können beispielsweise VollbrückenSchaltmodule, die Schaltmodule SM2 des zweiten Typs beispielsweise Halbbrücken-Schaltmodule sein, auf deren Aufbau in den nachfolgenden Figuren 2 und 3 näher eingegangen wird. Jedes Schaltmodul SM umfasst steuerbare Halbleiterschalter, z.B. IGBT oder dergleichen, einen Energiespeicher sowie eine Steuerungsbaugruppe, mittels der die Halbleiterschalter angesteuert werden können. Es ist darüber hinaus grundsätzlich denkbar, dass die Stromrichteranordnung 1 weitere Schaltmodul-Typen umfasst.

Die Stromrichteranlage 1 umfasst ferner eine zentrale Regelungseinrichtung 12, die zum Regeln des MMC 2 und zum Ansteuern der Schaltmodule SM eingerichtet ist. Die Regelungseinrichtung 12 erhält von einer übergeordneten Instanz Vorgaben bezüglich der geforderten Wirkleistung und Blindleistung, die von der Regelungseinheit in Sollwerte einiger Regelungsparameter umgesetzt werden. Die Regelungsparameter können beispielsweise eine wechselspannungsseitige Spannung Uac, ein wechselspannungsseitiger Strom Iac, ein gleichspannungsseitiger Strom Idc und/oder eine gleichspannungsseitige Spannung Udc sein. In Stromrichteranlagen, die als ein symmetrischer Monopol konzipiert sind, sind eine Spannung zwischen dem positiven Gleichspannungspol und dem Erdpotenzial, Udc+, und eine Spannung zwischen dem negativen Gleichspannungspol und dem Erdpotenzial, Udc-, von Bedeutung.

Figur 2 zeigt ein Schaltmodul SM1 des ersten Typs, das für den Stromrichter der Figur 1 geeignet ist, und das in einer Vollbrückenschaltung geschaltet ist. Das Schaltmodul SM1 umfasst einen ersten abschaltbaren Halbleiterschalter H1, dem eine erste Freilaufdiode D1 antiparallel geschaltet ist, einen zweiten abschaltbaren Halbleiterschalter H2, dem eine zweite Freilaufdiode D2 antiparallel geschaltet ist, wobei der erste und der zweite Halbleiterschalter H1, H2 in einer ersten Halbleiterreihenschaltung miteinander verbunden sind und gleiche Durchlassrichtung aufweisen. Das Schaltmodul SM2 umfasst ferner einen dritten abschaltbaren Halbleiterschalter H3, dem eine dritte Freilaufdiode D3 antiparallel geschaltet ist, und einen vierten abschaltbaren Halbleiterschalter H4, dem eine vierte Freilaufdiode D4 antiparallel geschaltet ist, wobei der dritte und der vierte Halbleiterschalter H3, H4 in einer zweiten Halbleiterreihenschaltung miteinander verbunden sind und gleiche Durchlassrichtung aufweisen. Die beiden Halbleiterreihenschaltungen sind parallel zueinander und zu einem Energiespeicher C in Form eines Kondensators angeordnet, an dem eine Kondensatorspannung Uc ansteht. Des Weiteren umfasst das Schaltmodul SM1 ferner eine erste Anschlussklemme X1, die zwischen den Halbleiterschaltern H1, H2 der ersten Halbleiterreihenschaltung angeordnet ist, und eine zweite Anschlussklemme X2, die zwischen den Halbleiterschaltern H3, H4 der zweiten Halbleiterreihenschaltung angeordnet ist. Durch geeignete Ansteuerung der Halbleiterschalter H1-4 kann an den Anschlüssen X1, X2 eine Schaltmodulspannung USM1 erzeugbar, die der Kondensatorspannung Uc entspricht, der negativen Kondensatorspannung -Uc entspricht, oder aber eine Nullspannung.

Figur 3 zeigt ein Schaltmodul SM2 des zweiten Typs, das für den Stromrichter der Figur 1 geeignet ist, und das in einer Halbbrückenschaltung geschaltet ist. In einem Kondensatorzweig ist eine Parallelschaltung eines ersten Halbleiterschalters S1 und eines Kondensators C angeordnet. In einem Brückenzweig zwischen zwei Anschlüssen X1, X2 des ersten Schaltmoduls SM2 ist ein zweiter Halbleiterschalter angeordnet. Den beiden Halbleiterschaltern S1, S2 ist jeweils eine Freilaufdiode F antiparallel geschaltet. Durch geeignete Ansteuerung der beiden Halbleiterschalter S1, S2 kann an den Anschlüssen X1, X2 eine Schaltmodulspannung USM2 erzeugbar, die der Kondensatorspannung Uc entspricht, oder aber eine Nullspannung.

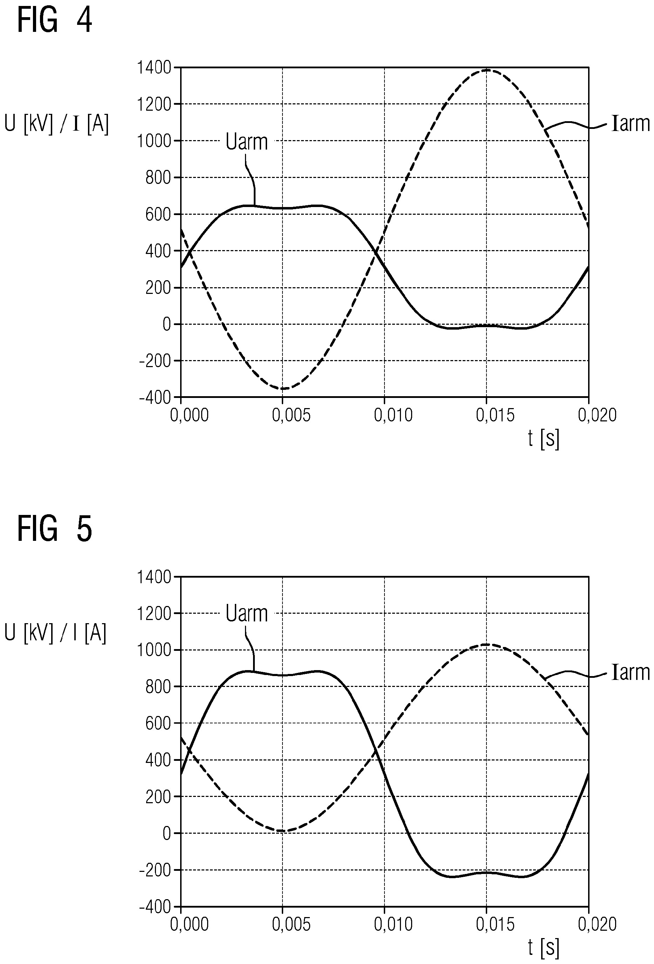

Figur 4 zeigt in einem Diagramm den zeitlichen Verlauf einer Armspannung Uarm und eines Armstromes Iarm. Dabei ist auf der x-Achse des Diagramms eine Zeit t (in Sekunden) und auf der y-Achse des Diagramms eine Spannung in Kilovolt bzw. ein Strom in Ampere aufgetragen. Es ist erkennbar, dass die Armspannung Uarm einen DC-Anteil und einen AC-Anteil umfasst. In dem in Figur 5 dargestellten Beispiel entspricht der DC-Anteil einem DC-Nominalwert und der AC-Anteil ebenfalls einem AC-Nominalwert. Der Armstrom Iarm weist einen negativen Bereich und somit zwei Nulldurchgänge während einer Periode des Armstromes auf.

Figur 5 zeigt in einem Diagramm den zeitlichen Verlauf einer Armspannung Uarm und eines Armstromes Iarm. Dabei ist auf der x-Achse des Diagramms eine Zeit t (in Sekunden) und auf der y-Achse des Diagramms eine Spannung in Kilovolt bzw. ein Strom in Ampere aufgetragen. Es ist erkennbar, dass die Armspannung Uarm einen DC-Anteil und einen AC-Anteil umfasst. Im Gegensatz zu dem in Figur 4 dargestellten Beispiel entspricht in dem in Figur 5 dargestellten Beispiel der DC-Anteil einem DC-Nominalwert und der AC-Anteil einem eineinhalbfachen AC-Nominalwert. Der Armstrom Iarm weist hierbei keinen Nulldurchgang während der gesamten Periode des Armstromes auf.

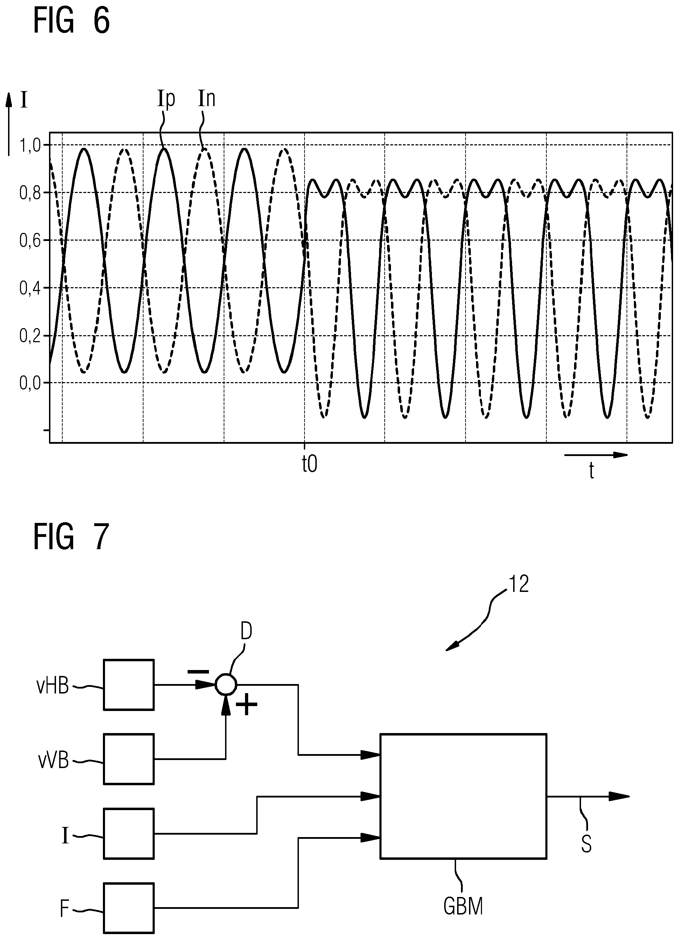

In Figur 6 ist ein Beispiel für einen Armstromverlauf für einen ersten Armstrom In und einen zweiten Armstrom Ip eines der Stromrichterzweige dargestellt. Das Diagramm der Figur 6 weist dazu eine erste Achse I, auf der Stromstärke in beliebigen, normierten Einheiten, und eine zweite Achse t, auf der Zeit in beliebigen Einheiten aufgetragen sind. Bis zu einem ausgezeichneten Zeitpunkt t0 zeigt das Diagramm Verläufe der Armströme, ohne dass ein Kreisstrom erzeugt ist. Es ist erkennbar, dass die Verläufe der Armströme jeweils keinen Nulldurchgang aufweisen. Ab dem Zeitpunkt t0 ist im Stromrichter ein Kreisstrom erzeugt, der ein Sinusstrom ist (eine Sinusform aufweist), und zwar mit einer Frequenz von 100 Hz. Dieser Kreisstrom bewirkt nun erkennbar, dass die Armströme Ip und In in ihren Verläufen Nulldurchgänge aufweisen.

In Figur 7 ist ein Teil einer Regelungseinrichtung 12 der Stromrichteranordnung 1 der Figur 1 dargestellt. Gemäß dem Ausführungsbeispiel der Figur 6 ist ein Gruppenbalancierungsmodul GBM bereitgestellt. Dem Gruppenbalancierungsmodul GBM wird eingangsseitig eine Differenz der Schaltmodulspannungen bzw. der Energiespeicherspannungen vVB der Vollbrückenschaltmodule (oder der mittleren Energiespeicherspannung der Vollbrückenschaltmodule) und der Schaltmodulspannungen bzw. der Energiespeicherspannungen vHB der Halbbrückenschaltmodule (oder der mittleren Energiespeicherspannung der Halbbrückenschaltmodule) aller Stromrichterarme zugeführt, die mittels eines Differenzierers D ermittelt worden ist. Zudem werden dem Gruppenbalancierungsmodul GBM die Armströme I der Stromrichterarme zugeführt. Zusätzlich wird dem Gruppenbalancierungsmodul GBM ein Informationssignal zur Verfügung gestellt, die eine Information über einen transienten Netzzustand enthält. In Abhängigkeit von den vorliegenden Informationen generiert das Gruppenbalancierungsmodul GBM eine Anweisung S zur Erzeugung eines oder mehrere einander überlagernder Stromrichterkreisströme, die von nachgeschalteten Teilen der Regelungseinrichtung 12 umgesetzt werden kann.

## Patentansprüche

1. Verfahren zum Betreiben einer Stromrichteranordnung (1) mit einem modularen Mehrstufenstromrichter (2), der wenigstens einen Stromrichterarm (5-10) mit einer Reihenschaltung zweipoliger Schaltmodule (SM1, SM2) umfasst, wobei jedes der Schaltmodule (SM1, SM2) mehrere Halbleiterschalter (H1-4, S1,2) sowie einen Energiespeicher (C) aufweist, wobei wenigstens einige der Schaltmodule Schaltmodule eines ersten Typs (SM1) und wenigstens einige weitere der Schaltmodule Schaltmodule eines zweiten Typs (SM2) sind, bei dem an dem wenigstens einen Stromrichterarm (5-10) eine Armspannung erzeugt wird, die einen Armstrom durch den Stromrichterarm bewirkt, wobei zur Erzeugung wenigstens eines Armstrom-Nulldurchganges ein Stromrichterkreisstrom durch den Mehrstufenstromrichter erzeugt wird,
**dadurch gekennzeichnet,**
**dass** der Stromrichterkreisstrom einen rechteckförmigen oder trapezförmigen Strompuls aufweist.

2. Verfahren nach Anspruch 1, wobei im Betrieb der Stromrichteranordnung (1) an Anschlussklemmen der Schaltmodule des ersten Typs (SM1) jeweils eine positive Schaltmodulspannung, eine negative Schaltmodulspannung oder eine Nullspannung und an Anschlussklemmen der Schaltmodule des zweiten Typs (SM2) jeweils eine positive Schaltmodulspannung oder eine Nullspannung erzeugt werden.

3. Verfahren nach einem der vorangehenden Ansprüche, wobei der Mehrstufenstromrichter (2) mehrere Stromrichterarme (5-10) umfasst, wobei der erzeugte Stromrichterkreisstrom in einem durch die Stromrichterarme (5-10) gebildeten geschlossenen Stromkreis fließt.

4. Verfahren nach Anspruch 3, wobei der Mehrstufenstromrichter (2) einen ersten Stromrichterzweig (5,8) umfasst, der sich zwischen einem ersten und einem zweiten Gleichspannungspol (13,14) des Mehrstufenstromrichters erstreckt, wobei der erste Stromrichterzweig einen ersten Wechselspannungsanschluss (15a) zum Verbinden mit einer ersten Netzphase eines Wechselspannungsnetzes (3), einen ersten Stromrichterarm (5) zwischen dem ersten Gleichspannungspol (13) und dem ersten Wechselspannungsanschluss (15a) sowie einen zweiten Stromrichterarm (8) zwischen dem ersten Wechselspannungsanschluss (15a) und dem zweiten Gleichspannungspol (14) umfasst, wobei der erste und der zweite Stromrichterarm jeweils eine Reihenschaltung von Schaltmodulen umfassen, so dass eine erste bzw. zweite Armspannung am zugeordneten Stromrichterarm erzeugbar ist, die einen entsprechend zugeordneten Armstrom durch den zugeordneten Stromrichterarm bewirkt, und der Mehrstufenstromrichter ferner einen zweiten Stromrichterzweig (6,9) umfasst, der sich zwischen dem ersten und dem zweiten Gleichspannungspol des Mehrstufenstromrichters erstreckt, wobei der zweite Stromrichterzweig einen zweiten Wechselspannungsanschluss (15b) zum Verbinden mit einer zweiten Netzphase eines Wechselspannungsnetzes (3), einen dritten Stromrichterarm (6) zwischen dem ersten Gleichspannungspol (13) und dem zweiten Wechselspannungsanschluss (15b) sowie einen vierten Stromrichterarm (9) zwischen dem zweiten Wechselspannungsanschluss (15b) und dem zweiten Gleichspannungspol (14) umfasst, wobei der dritte und der vierte Stromrichterarm jeweils eine Reihenschaltung von Schaltmodulen umfassen, so dass eine dritte bzw. vierte Armspannung am zugeordneten Stromrichterarm erzeugbar ist, die einen entsprechend zugeordneten Armstrom durch den zugeordneten Stromrichterarm bewirkt, und zur Erzeugung eines Armstrom-Nulldurchganges in einem der Stromrichterarme ein Stromrichterkreisstrom durch den Mehrstufenstromrichter erzeugt wird, der in dem durch die beiden Stromrichterzweige gebildeten Stromkreis fließt.

5. Verfahren nach einem der vorangehenden Ansprüche, wobei ein sinusförmiger Stromrichterkreisstrom erzeugt wird.

6. Verfahren nach Anspruch 1, wobei der Strompuls in einem Minimum und/oder einem Maximum des Armstromes erzeugt wird.

7. Verfahren nach einem der vorangehenden Ansprüche, wobei eine Amplitude und/oder eine Phase und/oder eine Frequenz des Stromrichterkreisstromes in Abhängigkeit einer Energieasymmetrie der Energien zwischen den Schaltmodulen des ersten und des zweiten Typs festgelegt werden.

8. Verfahren nach einem der Ansprüche 1 bis 7, wobei eine Pulsbreite und/oder Pulshöhe des Strompulses in Abhängigkeit einer Energieasymmetrie der Energien zwischen den Schaltmodulen des ersten und des zweiten Typs festgelegt werden.

9. Verfahren nach einem der vorangehenden Ansprüche, wobei eine Phase des Stromrichterkreisstromes derart bestimmt wird, dass diese einer Phase einer vorgegebenen Blindleistung entspricht.

10. Verfahren nach einem der vorangehenden Ansprüche, wobei der Stromrichterkreisstrom eine Frequenz zwischen 10 Hz und 70 Hz aufweist.

11. Verfahren nach einem der vorangehenden Ansprüche 1 bis 9, wobei
der Stromrichterkreisstrom eine Frequenz von mehr als 70 Hz aufweist, besonders bevorzugt einem Vielfachen von 50 Hz oder einem Vielfachen von 60 Hz entspricht.

12. Verfahren nach einem der vorangehenden Ansprüche, wobei das Erzeugen des Stromrichterkreisstromes nach einer Detektion eines transienten Netzereignisses erfolgt.

13. Stromrichteranordnung (1) mit einem modularen Mehrstufenstromrichter (2), der wenigstens einen Stromrichterarm (5-10) mit einer Reihenschaltung zweipoliger Schaltmodule (SM1, SM2) umfasst, wobei jedes der Schaltmodule mehrere Halbleiterschalter (H1-4, S1-2) sowie einen Energiespeicher (C) aufweist, wobei wenigstens einige der Schaltmodule Schaltmodule eines ersten Typs (SM1) und wenigstens einige weitere der Schaltmodule Schaltmodule eines zweiten Typs (SM2) sind, sowie mit einer Regelungseinrichtung (12), die zum Durchführen eines Verfahrens nach einem der vorangehenden Ansprüche eingerichtet ist.

## Claims

1. Method for operating a converter arrangement (1) having a modular multilevel converter (2) which comprises at least one converter arm (5-10) having a series connection of two-pole switching modules (SM1, SM2), wherein each of the switching modules (SM1, SM2) has a plurality of semiconductor switches (H1-4, S1,2) and an energy store (C), wherein at least some of the switching modules are switching modules of a first type (SM1) and at least some other of the switching modules are switching modules of a second type (SM2), in which method an arm voltage is generated across the at least one converter arm (5-10), which arm voltage brings about an arm current through the converter arm, wherein a converter circulating current is generated through the multilevel converter in order to generate at least one arm-current zero crossing, **characterized in that** the converter circulating current has a rectangular or trapezoidal current pulse.

2. Method according to Claim 1, wherein during operation of the converter arrangement (1) a positive switching-module voltage, a negative switching-module voltage or a zero voltage is generated at connection terminals of each of the switching modules of the first type (SM1) and a positive switching-module voltage or a zero voltage is generated at connection terminals of each of the switching modules of the second type (SM2).

3. Method according to either of the preceding claims, wherein the multilevel converter (2) comprises a plurality of converter arms (5-10), wherein the generated converter circulating current flows in a closed circuit formed by the converter arms (5-10).

4. Method according to Claim 3, wherein the multilevel converter (2) comprises a first converter branch (5,8) which extends between a first and a second DC voltage pole (13,14) of the multilevel converter, wherein the first converter branch comprises a first AC voltage connection (15a) for connecting to a first grid phase of an AC voltage grid (3), a first converter arm (5) between the first DC voltage pole (13) and the first AC voltage connection (15a), and a second converter arm (8) between the first AC voltage connection (15a) and the second DC voltage pole (14), wherein the first and the second converter arm each comprise a series connection of switching modules such that a first or second arm voltage, respectively, is able to be generated across the assigned converter arm, which arm voltage brings about a correspondingly assigned arm current through the assigned converter arm, and the multilevel converter further comprises a second converter branch (6,9) which extends between the first and the second DC voltage pole of the multilevel converter, wherein the second converter branch comprises a second AC voltage connection (15b) for connecting to a second grid phase of an AC voltage grid (3), a third converter arm (6) between the first DC voltage pole (13) and the second AC voltage connection (15b), and a fourth converter arm (9) between the second AC voltage connection (15b) and the second DC voltage pole (14), wherein the third and the fourth converter arm each comprise a series connection of switching modules such that a third or fourth arm voltage, respectively, is able to be generated across the assigned converter arm, which arm voltage brings about a correspondingly assigned arm current through the assigned converter arm, and a converter circulating current is generated through the multilevel converter in order to generate an arm-current zero crossing in one of the converter arms, which converter circulating current flows in the circuit formed by the two converter branches.

5. Method according to one of the preceding claims, wherein a sinusoidal converter circulating current is generated.

6. Method according to Claim 1, wherein the current pulse is generated in a minimum and/or a maximum of the arm current.

7. Method according to one of the preceding claims, wherein an amplitude and/or a phase and/or a frequency of the converter circulating current are defined on the basis of an energy asymmetry of the energies between the switching modules of the first and of the second type.

8. Method according to one of Claims 1 to 7, wherein a pulse width and/or pulse height of the current pulse are defined on the basis of an energy asymmetry of the energies between the switching modules of the first and of the second type.

9. Method according to one of the preceding claims, wherein a phase of the converter circulating current is determined in such a way that it corresponds to a phase of a predefined reactive power.

10. Method according to one of the preceding claims, wherein the converter circulating current has a frequency between 10 Hz and 70 Hz.

11. Method according to one of preceding Claims 1 to 9, wherein the converter circulating current has a frequency of more than 70 Hz, particularly preferably corresponding to a multiple of 50 Hz or to a multiple of 60 Hz.

12. Method according to one of the preceding claims, wherein the converter circulating current is generated after a transient grid event has been detected.

13. Converter arrangement (1) having a modular multilevel converter (2) which comprises at least one converter arm (5-10) having a series connection of two-pole switching modules (SM1, SM2), wherein each of the switching modules has a plurality of semiconductor switches (H1-4, S1-2) and an energy store (C), wherein at least some of the switching modules are switching modules of a first type (SM1) and at least some other of the switching modules are switching modules of a second type (SM2), and having a control device (12) which is configured to carry out a method according to one of the preceding claims.

## Revendications

1. Procédé pour faire fonctionner un agencement (1) de convertisseur comprenant un convertisseur (2) modulaire à plusieurs niveaux, qui comprend au moins un bras (5 à 10) de convertisseur ayant un circuit série de modules (SM1, SM2) bipolaires de coupure, dans lequel chacun des modules (SM1, SM2) de coupure a plusieurs interrupteurs (H1-4, S1, 2) à semi-conducteurs ainsi qu'un accumulateur (C) d'énergie, dans lequel au moins certains des modules de coupure sont des modules de coupure d'un premier type (SM1) et au moins certains autres des modules de coupure sont des modules de coupure d'un deuxième type (SM2), dans lequel on produit sur au moins un bras (5 à 10) du convertisseur une tension de bras, qui provoque un courant de bras dans le bras du convertisseur, dans lequel pour la production d'au moins un passage par zéro du courant de bras on produit un courant circulaire de convertisseur par le convertisseur à plusieurs niveaux,
**caractérisé**
**en ce que** le courant circulaire de convertisseur a une impulsion du courant rectangulaire ou trapézoïdale.

2. Procédé suivant la revendication 1, dans lequel, lorsque l'agencement (1) de convertisseur est en fonctionnement, on produit aux bornes de connexion des modules de coupure du premier type (SM1) respectivement une tension positive de module de coupure, une tension négative de module de coupure ou une tension zéro et aux bornes de connexion des modules de coupure du deuxième type (SM2) respectivement une tension positive de module de coupure ou une tension nulle.

3. Procédé suivant l'une des revendications précédentes, dans lequel le convertisseur (2) à plusieurs niveaux comprend plusieurs bras (5 à 10) de convertisseur, dans lequel le courant circulaire de convertisseur produit passe dans un circuit fermé formé par les bras (5 à 10) du convertisseur.

4. Procédé suivant la revendication 3, dans lequel le convertisseur (2) à plusieurs niveaux comprend une première branche (5, 8) de convertisseur, qui s'étend entre un premier et un deuxième pôle (13, 14) en tension continue du convertisseur à plusieurs niveaux, dans lequel la première branche du convertisseur comprend une première borne (15a) de tension alternative de connexion à une première phase d'un réseau (3) en tension alternative, un premier bras (5) du convertisseur entre le premier pôle (13) en tension continue et la première borne (15a) en tension alternative ainsi qu'un deuxième bras (8) du convertisseur entre la première borne (15a) en tension alternative et le deuxième pôle (14) en tension continue, dans lequel le premier et le deuxième bras du convertisseur comprennent chacun un circuit série de modules de coupure, de manière à ce qu'une première et respectivement une deuxième tension de bras puisse être obtenue au bras du convertisseur affecté, qui provoque un courant de bras affecté correspondant dans le bras affecté du convertisseur, et le convertisseur à plusieurs niveaux comprend en outre une deuxième branche (6, 9) du convertisseur, qui s'étend entre le premier et le deuxième pôle en tension continue du convertisseur à plusieurs niveaux, dans lequel la deuxième branche du convertisseur comprend une deuxième borne (15b) en tension alternative de connexion à une deuxième phase d'un réseau (3) en tension alternative, un troisième bras (6) du convertisseur entre le premier pôle (13) en tension continue et la deuxième borne (15b) en tension alternative, ainsi qu'un quatrième bras (9) du convertisseur entre la deuxième borne (15b) en tension alternative et le deuxième pôle (14) en tension continue, dans lequel le troisième et le quatrième bras du convertisseur comprennent chacun un circuit série de modules de coupure, de manière à pouvoir produire une troisième et respectivement une quatrième tension de bras sur le bras affecté du convertisseur, qui provoque un courant de bras affecté correspondant dans le bras affecté du convertisseur et, pour la production d'un passage par zéro du courant de bras, on produit dans l'un des bras du convertisseur un courant circulaire de convertisseur dans le convertisseur à plusieurs niveaux, qui passe dans le circuit formé par les deux branches du convertisseur.

5. Procédé suivant l'une des revendications précédentes, dans lequel on produit un courant circulaire de convertisseur de forme sinusoïdale.

6. Procédé suivant la revendication 1, dans lequel on produit l'impulsion de courant dans un minimum et/ou un maximum du courant de bras.

7. Procédé suivant l'une des revendications précédentes, dans lequel on fixe une amplitude et/ou une phase et/ou une fréquence du courant circulaire du convertisseur en fonction d'une asymétrie des énergies entre les modules de coupure du premier et du deuxième type.

8. Procédé suivant l'une des revendications 1 à 7, dans lequel on fixe une largeur d'impulsion et/ou une hauteur d'impulsion de l'impulsion de courant en fonction d'une asymétrie des énergies entre les modules de coupure du premier et du deuxième type.

9. Procédé suivant l'une des revendications précédentes, dans lequel on détermine une phase du courant circulaire du convertisseur de manière à ce qu'elle corresponde à une phase d'une puissance réactive donnée à l'avance.

10. Procédé suivant l'une des revendications précédentes, dans lequel le courant circulaire du convertisseur a une fréquence comprise entre 10 Hz et 70 Hz.

11. Procédé suivant l'une des revendications 1 à 9 précédentes, dans lequel
le courant circulaire du convertisseur a une fréquence de plus de 70 Hz, en particulier de préférence d'un multiple de 50 Hz ou d'un multiple de 60 Hz.

12. Procédé suivant l'une des revendications précédentes, dans lequel la production du courant circulaire du convertisseur a lieu après une détection d'un évènement transitoire du réseau.

13. Agencement (1) de convertisseur comprenant un convertisseur (2) modulaire à plusieurs niveaux, qui comprend au moins un bras (5 à 10) de convertisseur ayant un circuit série de modules (SM1, SM2) bipolaires de coupure, dans lequel chacun des modules de coupure a plusieurs interrupteurs (H1-4, S1-2) à semi-conducteurs ainsi qu'un accumulateur (C) d'énergie, dans lequel au moins certains des modules de coupure sont des modules de coupure d'un premier type (SM1) et au moins certains autres des modules de coupure sont des modules de coupure d'un deuxième type (SM2), ainsi que comprenant un dispositif (12) de régulation, qui est agencé pour effectuer un procédé suivant l'une des revendications précédentes.
